# EUROPÄISCHE PATENTSCHRIFT

(11) **EP 2 732 217 B1**
(45) Veröffentlichungstag und Bekanntmachung des Hinweises auf die Patenterteilung: **24.08.2016**
(21) Anmeldenummer: 12733421.7
(22) Anmeldetag: 30.06.2012
(51) Int. Cl.: F24H 9/20, F24D 19/10, F24H 1/20

(54) **PUFFERSPEICHER MIT HEIZSTAB**
BUFFER STORAGE WITH HEATING ELEMENT
RÉSERVOIR D'ACCUMULATION POURVU D'UN THERMOPLONGEUR

(30) Priorität: 05.07.2011 DE 102011106659
(43) Veröffentlichungstag der Anmeldung: 21.05.2014
(73) Patentinhaber: BOB Holding GmbH, 97332 Volkach (DE)
(72) Erfinder: BECK, Bernhard, 97332 Volkach OT Dimbach (DE)
(86) Internationale Anmeldenummer: PCT/EP2012/002782
(87) Internationale Veröffentlichungsnummer: WO 2013/004371

(56) Entgegenhaltungen:
- CA-A1- 1 203 568
- CA-A1- 2 354 242
- US-A- 5 956 462
- US-A1- 2010 004 790
- US-A1- 2011 123 179

## Beschreibung

Die Erfindung betrifft eine Warmwasserversorgungseinrichtung mit einer Heizquelle, die auf einen Pufferspeicher einwirkt, dessen Ausgang an den Eingang eines ersten steuerbaren Mischreglers angeschlossen ist, dessen Ausgangsleitung an einem Warmwasserverbraucher oder einem Wärmeverbraucher angeschlossen ist, wobei die Heizquelle einen Heizstab oder eine Heizspirale umfasst, deren Betriebsmodus von einem Netzbetreiber eines elektrischen Versorgungsnetzes über eine Kommunikationseinrichtung einstellbar ist.

Eine Warmwasserversorgungseinrichtung der genannten Art ist beispielsweise aus der US 2011/0123179 A1 bekannt. Dort sind in dem Pufferspeicher ein oberes und ein unteres Heizelement vorgesehen, die selektiv von einem Netzbetreiber gesteuert werden können. Generell sind Warmwasserversorgungseinrichtungen in allen Wohngebäuden vorhanden, sofern sie nicht über Fernwärme betrieben werden. Als Heizquelle dienen unterschiedliche Aggregate, wie z. B. ein Ölbrenner, eine Gastherme, eine Wärmepumpe, ein Heizstab etc. Eine weitere Warmwasservorrichtung mit allen Merkmalen des Oberbegriffs von Anspruch 1 ist aus der US 5 956 462 A bekannt. Dort wird die Wassertemperatur im Pufferspeicher erfasst und datenmäßig verarbeitet, um einen Energiebedarfscode zu erstellen. Eine Steuer- und Regeleinheit verarbeitet den Energiebedarfscode zusammen mit den Daten der Energieverfügbarkeit, um eine Entscheidung des Zu- und Abschaltens des Pufferspeichers zu generieren.

Schließlich ist es aus der US 2010/004790 A1 noch bekannt, die aktuell gemessene Temperatur im Pufferspeicher an den Netzbetreiber zu übermitteln, um einen aktuellen Energieverbrauch zu beeinflussen.

Die Wurzel zu vorliegender Erfindung liegt in der Erzielung einer hinreichenden Stabilität in einem Versorgungsnetz von elektrischer Energie. Dazu soll anhand eines Beispiels kurz auf die momentan vorliegende Problematik eingegangen werden. Am Beispiel einer Nachtspeicherheizung kann bereits aus deren Namen abgeleitet werden, dass sie bisher dazu gedacht ist, in der Nacht, also bei verbrauchsschwachen Zeiten die elektrische Energie der Grundlastkraftwerke aufzunehmen und später über den Tag, wenn die Wärmeenergie eigentlich gebraucht wird, wieder abzugeben. Nun ist es bei der zunehmenden Verbreitung alternativer Energien aus Wind und Solarkraftwerken zur Zeit der Fall, dass bei einem hohen Anfall an erzeugter Energie diese nicht immer sinnvoll genutzt werden kann und zum Teil ins Ausland verschenkt wird, um sie zu einem späteren Zeitpunkt teuer zurückzukaufen. Eine noch weniger sinnvolle Alternative stellt die Abschaltung des alternativen Kraftwerks dar, wodurch an sich erzeugbare Energie erst gar nicht generiert wird. Es bedarf also Energiespeicher, die die momentan verfügbare aber eben momentan nicht benötigte Energie zwischenspeichert, wie es ein Pumpspeicherkraftwerk im Großen und eine Nachtspeicher- oder Fußbodenheizung im Kleinen vermag.

Ohne eine funktionierende Speicherung der elektrischen Energie kommt es zu Instabilitäten im Netz, die in hohem Maße von dem Einsatz regenerativer Energieerzeuger verursacht werden. Dazu ist auszuführen, dass jede Einspeisung von elektrischer Energie tendenziell spannungsanhebend wirkt und jeder Verbrauch tendenziell spannungssenkend. Da die spannungsanhebende Einspeisung sich sehr schnell ändern kann (bei Photovoltaikanlagen bewirkt eine Wolke im ansonsten blauen Himmel z.B. einen Leistungsabfall um 90 %), kann sich auch das Spannungsniveau am zugeordneten Netzverknüpfungspunkt ändern. Bei Dutzenden von Windrädern und Solaranlagen kann die Spannung im Netz entsprechend schwimmen, je nachdem, ob gerade der Wind weht und/oder die Sonne scheint.

Es sind sogenannte Smartmeter bekannt, die in Verbindung mit elektrischen Verbrauchern wie Waschmaschine, Trockner etc. verwendet werden, um diese Geräte zu einem aus Sicht der Energieerzeuger geeigneten Zeitpunkt einzuschalten. Einmal eingeschaltet spulen die Geräte dann ihr Programm ab, unabhängig davon, wie sich die Netzsituation entwickelt hat. Gerade bei der alternativen Energieerzeugung kann sich die Erzeugungssituation aber von einer Minute zur nächsten komplett anders darstellen. Die Smartmeter haben zudem den Nachteil eines relativ hohen Anschaffungspreises. Hinzu kommt noch, dass die Ansteuerung der Smartgeräte über ein auf die Versorgungsleitung aufgeprägtes oder separat übermitteltes Steuersignal einen hohen Aufwand an Steuer- und Kommunikationstechnologie erfordert. Insbesondere die Kommunikationswege verursachen auf Dauer erhebliche Kosten.

Hinzu kommt, dass Smartmeter zur Leistungsaufnahme oder -abgabe angesteuert werden. Die aktuelle Spannungssituation vor Ort bleibt jedoch unbeachtet. So kann es vorkommen, dass das Ortsnetz mehr Energie aufnehmen soll, die Smartmeter alle zur Energieaufnahme angesteuert werden, obwohl an einer Stelle im Ortsnetz bereits die maximale Last, z.B. durch einen Industriebetrieb, erreicht ist, und eine weitere Leistungsaufnahme durch private Haushalte das Netz hinsichtlich seiner Spannung die Grenzwerte unterschreiten würde. Zusätzlich könnte es an einer anderen Stelle durch die starke Einspeisung von Solarstrom erforderlich sein, sehr viel Energie aufzunehmen. Der Smartmeter regelt aber pauschal alle in dem Netz befindliche Verbraucher an.

Vorliegende Erfindung geht aus von der Überlegung, dass der Netzbetreiber die Stelle ist, die am besten weiß, wann ein Verbrauch an elektrischer Energie bezüglich der Netzstabilisation zu einem günstigen Zeitpunkt wo vorzunehmen ist oder nicht.

Ausgehend von dieser Überlegung hat es sich die Erfindung zur Aufgabe gemacht, eine Warmwasserversorgungseinrichtung auf kostengünstige Weise zu erweitern, um sie zur Aufnahme von aus Sicht des Netzbetreibers überschüssiger elektrischer Energie zu befähigen.

Diese Aufgabe wird erfindungsgemäß dadurch gelöst, dass die vorliegende Netzspannung (U) gemessen wird, und der Messwert in die Einstellung des Betriebsmodus einfließt.

Die Einstellung des Betriebsmodus erfolgt dabei mittels eines Steuersignals, welches von einer Leitwarte des Netzbetreibers abgesetzt wird und von der Kommunikationseinrichtung empfangen wird. Die Kommunikationseinrichtung steht über ein Schaltelement mit der Heizspirale in Wirkverbindung, welches bei Anliegen des Steuersignals das Schaltelement schließt und so die Heizspirale an das Netz anschließt. Die erfolgende Aufheizung des Pufferspeichers entzieht dem Netz Leistung und wirkt daher tendenziell spannungssenkend.

Es ist vorteilhaft, wenn immer nur bei Anliegen des Steuersignals ein Heizvorgang erfolgt. Dann kann der Netzbetreiber kurzfristig reagieren und gegebenenfalls nur für geringe Zeitspannen von wenigen Sekunden bis einigen Minuten den Heizvorgang initiieren, um z.B. die Spitzenerzeugung einer Windbö aufzufangen, die einen Windpark für eine kurze Periode besonders effizient arbeiten lässt. Anstelle eines kontinuierlichen Anliegens des Steuersignals kann das Steuersignal auch auf einen einfachen Ein/Aus - Schalter einwirken, der bei jedem Steuerimpuls in die jeweils andere Betriebsart schaltet.

Eine besonders vorteilhafte Ausgestaltung sieht vor, dass die Information zur Temperatur des Inhalts des Pufferspeichers über die Kommunikationseinrichtung dem Netzbetreiber zur Verfügung gestellt wird. Dann kann dieser insbesondere bei einer Vielzahl von angeschlossenen Warmwasserversorgungseinrichtungen entscheiden, welche die momentan geringste Temperatur aufweisen und diese bevorzugt ans Netz nehmen. Um immer noch eine Regelreserve für die Netzstabilität in Hinterhand zu halten, ist es vorteilhaft, wenn eine Heizreserve bis zum Erreichen einer zulässigen Maximaltemperatur des Pufferspeicherinhalts vorgehalten wird, die erst bei einem Absetzen eines modifizierten Steuersignals angebrochen wird. Beträgt z.B. die höchst zulässige Maximaltemperatur für den Inhalt des Pufferspeichers 95°C, so wird auch bei einem Anliegen des Steuersignals kein weiterer Heizvorgang erfolgen, wenn das Thermometer bereits 90°C misst. Diese Blockade wird erst aufgehoben, wenn vom Netzbetreiber ein modifiziertes Steuersignal abgesetzt wird. Das Absetzen dieses modifizierten Steuersignals bleibt Situationen vorbehalten, in denen das Versorgungsnetz kurz vor dem Zusammenbruch wegen herrschender Überspannung steht.

In allen Fällen gilt es zu berücksichtigen, dass diese obere Grenztemperatur im Pufferspeicher nicht überschritten wird.

Die Kommunikationseinrichtung ist eingerichtet, ein Steuersignal auf zumindest eine Versorgungsleitung des Versorgungsnetzes auf zu modulieren, wobei das Steuersignal von jeweils einer Empfangseinheiten empfangen wird und die Einstellung des Betriebsmodus bewirkt. Beides sind erprobte Vorgehensweisen, die kostengünstig zu realisieren sind.

Liegt ein System mit einer Vielzahl von Warmwasserversorgungseinrichtungen vor, so sind deren Betriebsmodi alle von dem Netzbetreiber einstellbar. Insbesondere sind alle Warmwasserversorgungseinrichtungen über denselben Sender der Kommunikationseinrichtung vom Netzbetreiber erreichbar. Die entsprechende Anzahl an Empfangseinheiten ist jeweils den einzelnen Warmwasserversorgungseinrichtungen zugeordnet. Ein nennenswerter Beitrag zur Netzstabilisation ist dann erzielbar, wenn mehrere Zehntausend Warmwasserversorgungseinrichtungen von der Leitwarte des Netzbetreibers erreichbar sind. Setzt man einen Heizstab oder eine Heizspirale mit einer Leistungsaufnahme von 3 KW an, so können mit dem System bei Zehntausend Teilnehmern bereits 30 MW elektrische Leistung bedarfsgerecht und kurzfristig gesteuert werden.

An dem Ausgang des Pufferspeichers ist ein zweiter steuerbarer Mischregler dann vorgesehen, wenn die Warmwasserversorgungseinrichtung sowohl für das Brauchwasser zuständig ist, als auch für das Heizwasser im Heizsystem des Gebäudes. Der erste Mischregler speist eine Warmwasserzufuhrleitung und der zweite Mischregler getrennt davon eine Heizwasserzufuhrleitung. Bei Einsatz einer Heizquelle mit mehreren Heizstäbe und/oder Heizspiralen, sollte deren jeweiliger Betriebsmodus getrennt von dem Betriebsmodus der anderen Heizstäbe/Heizspiralen über die Kommunikationseinrichtung einstellbar sein. So kann von der Leitwarte des Netzbetreibers aus eine feinere Abstimmung auf seine Bedürfnisse beim Betrieb jeder einzelnen Warmwasserversorgungsein-richtung erfolgen.

Die Erfindung betrifft auch ein Verfahren nach Anspruch 9 zum Betrieb einer Warmwasserversorgungsvorrichtung nach einem der Ansprüche 1-4.

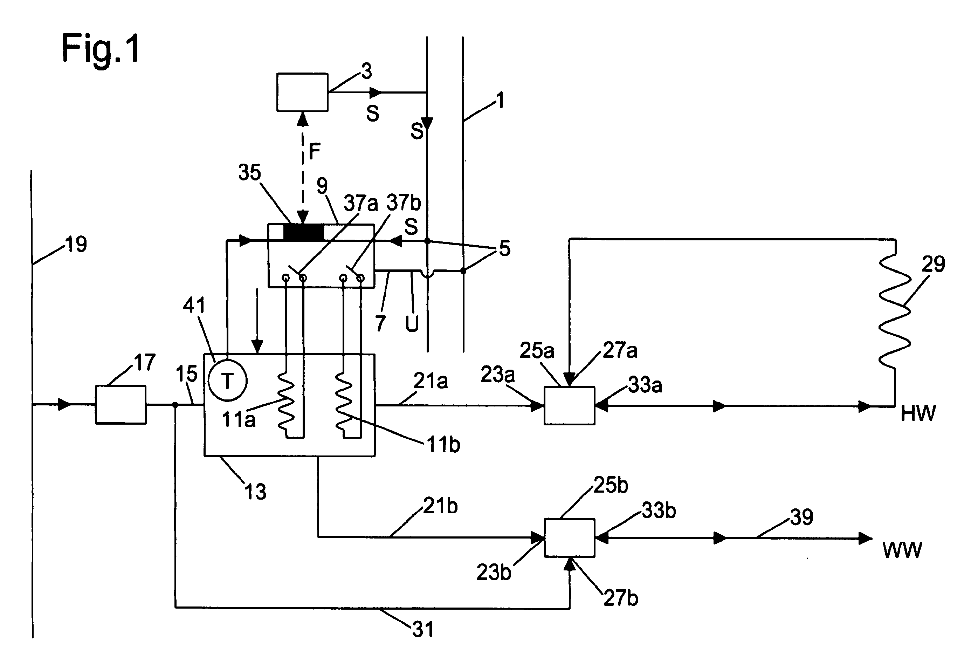

Weitere Vorteile und Ausgestaltungen der Erfindung ergeben sich aus der Beschreibung eines Ausführungsbeispiels anhand der Figur, die einen schematischen Aufbau einer erfindungsgemäßen Warmwasserversorgungs-einrichtung darstellt.

In der Figur ist mit 1 ein Teilstück eines elektrischen Versorgungsnetzes eines Netzbetreibers gezeigt, der symbolisch durch eine Leitwarte 3 repräsentiert ist. Von einem Netzverknüpfungspunkt 5 zweigt eine Versorgungsleitung 7 zu einer Heizvorrichtung ab, die zwei Heizstäbe 11 a, 11 b aufweist, deren Enden in einem Pufferspeicher 13 münden. Der Pufferspeicher ist ein Heißwassergefäß, welches in normalen Wohngebäuden ein Volumen zwischen 500 L bis 5000 L aufweist und in dem Heißwasser bis zu einer Temperatur von 95°C vorgehalten werden kann. Der Pufferspeicher 13 hat eine Kaltwasser-Zuleitung 15, die über einen Wasserzähler 17 mit einer örtlichen Wasserversorgungsleitung 19 verbunden ist. Ausgangsseitig sind an den Pufferspeicher 13 eine erste und zweite Ausgangsleitung 21 a, bzw. 21 b angeschlossen, die jeweils zu einem ersten Mischreglereingang 23a, 23b eines ersten bzw. zweiten Mischreglers 25a, 25b führen. Die Mischregler 25a, 25b weisen jeweils einen zweiten Mischreglereingang 27a, 27b auf, wobei an den zweiten Mischreglereingang 27a des ersten Mischreglers 25a die Rückführungsleitung einer Fußbodenheizung 29 und an den zweiten Mischreglereingang 27b des zweiten Mischreglers 25b ein Abzweig 31 der Kaltwasserzuleitung 15 geführt sind. Die zugehörigen Mischreglerausgänge 33a, 33b speisen die Fußbodenheizung 29 bzw. eine Warmwasserzuführungsleitung 39 eines Warmwassersystem mit Dusche, Badewanne, etc.

Im oder am Pufferspeicher 13 ist noch ein Thermometer 41 vorgesehen, dessen Temperaturmesswert der Empfangseinrichtung 35 zugeführt ist. In dieser Ausgestaltung ist die Empfangsvorrichtung als Empfangs- und Sendeeinheit konzipiert, die auch Information in Form von Signalen an die Leitwarte 3 weiterleiten kann.

Erfindungsgemäß ist die Heizvorrichtung 9 mit einem Empfangsgerät 35 als Teil einer Kommunikationsanlage ausgestattet, welches ein Steuersignal S empfängt, das von der Leitwarte 3 aus abgesetzt wurde. In der Leitwarte 3 ist das zugehörige Sendeteil vorhanden. In einer späteren Ausführungsform ist ein bi-direktionaler Datenaustausch vorgesehen, so dass die Kommunikationsanlage jeweils eine Sende-Empfängereinheit sowohl in der Leitwarte als auch in der Heizvorrichtung 9 hat.

Das Steuersignal S kann wie im gezeigten Fall ein Funksignal sein oder das Empfangsgerät 35 steht mit der Versorgungsleitung 7 in Wirkverbindung, auf welche das Steuersignal S aufgeprägt wurde. Das Steuersignal S wird innerhalb der Heizvorrichtung 9 in ein Schaltsignal umgesetzt, welches ein erstes und/oder zweites Schaltelement 37a, 37b schließt, wenn es geöffnet war oder öffnet, wenn es geschlossen war. Alternativ hierzu können die Schaltelemente 37a, 37b auch so gestaltet sein, dass sie bei Anliegen des Steuersignals S geschlossen sind und bei Fehlen des Steuersignals S geöffnet sind.

Das Steuersignal S wird von der Leitwarte 3 unter dem Kriterium der Beibehaltung der Netzstabilität mit folgender Maßgabe generiert: Ist zu viel Energie im Versorgungsnetz 1 unterwegs (wird also von regenerativen Energieerzeugern besonders viel Energie eingespeist), werden die Schaltelemente 37a und/oder 37b geschlossen, um die Energie dem Netz 1 zu entziehen und einen Spannungsanstieg auf eine gefährliche Überspannung hin zu vermeiden. Die Entnahme der Energie wird dabei sinnhaft vorgenommen, das heißt, sie wird dem Verwendungszweck "Aufheizung des Pufferspeichers 13" zugeführt, die zu einem späteren Zeitpunkt, wenn wenig Energie im Netz zur Verfügung steht, entfallen kann und damit das Netz entlastet wird. Dies ist möglich, da dann zu dem späteren Zeitpunkt eine womöglich wegen niedriger Temperatur im Pufferspeicher 13 vorzunehmende Aufheizung nicht vorgenommen werden muss, da bereits früher auf Vorrat geheizt wurde.

Eine besonders vorteilhafte Ausführungsform der Erfindung sieht vor, dem Netzbetreiber anhand einer Information über die an der Verbrauchsstelle "Pufferspeicher 13" herrschende Spannung U ein weiteres Kriterium an die Hand zu geben, um zu entscheiden, ob die Zuschaltung der Heizspiralen 11a, 11 b zur Stabilisierung oder zur Destabilisierung des Versorgungsnetzes 1 beitragen wird.

Das kann z.B. heißen, dass, wenn die herrschende Spannung oberhalb von 235 Volt ist, also eine stabile, sichere Versorgungslage vorliegt, bereits bei einer niedrigeren Temperatur im Pufferspeicher 13 der Heizstab 11a, 11 b aktiviert wird, als es der Fall wäre, wenn die vorliegende Spannung U lediglich 220 Volt betragen würde.

### Bezugszeichenliste

- 1: Teilstück elektrisches Versorgungsnetz
- 3: Leitwarte
- 5: Netzverknüpfungspunkt
- 7: Elektro-Versorgungsleitung
- 9: Heizvorrichtung
- 11a, 11b: Heizstab
- 13: Pufferspeicher
- 15: Kaltwasserzuleitung
- 17: Wasserzähler
- 19: Wasserversorgung
- 21 a,: 21 b Ausgangsleitung Pufferspeicher
- 23a, 23b: erster Mischreglereingang
- 25a, 25b: Mischregler
- 27a, 27b: zweiter Mischreglereingang
- 29: Fußbodenheizung
- 31: Abzweig
- 33a, 33b: Mischreglerausgang
- 35: Empfangsgerät
- 37a, 37b: Schaltelement
- 39: Warmwasserzuführleitung
- 41: Thermometer
- S: Steuersignal
- F: Funksignal
- U: Spannung

## Patentansprüche

1. Warmwasserversorgungseinrichtung mit einer Heizquelle, die auf einen Pufferspeicher (13) einwirkt, dessen Ausgang (21 a) an den Eingang (23a) eines ersten Mischreglers (25a) angeschlossen ist, dessen Mischreglerausgang (33a) mit einem Warmwasserverbraucher oder einem Wärmeverbraucher (29) verbunden ist, wobei die Heizquelle einen Heizstab (11a) oder eine Heizspirale umfasst, deren Betriebsmodus von einem Netzbetreiber (3) eines elektrischen Versorgungsnetzes (1) über eine Kommunikationseinrichtung (35) einstellbar ist, **dadurch gekennzeichnet, dass** die vorliegende Netzspannung (U) gemessen wird, und der Messwert in die Einstellung des Betriebsmodus einfließt.

2. Warmwasserversorgungseinrichtung nach Anspruch 1, **dadurch gekennzeichnet, dass** an einem weiteren Ausgang (21 b) ein zweiter steuerbarer Mischregler (25b) angeschlossen ist, wobei der erste Mischregler (25a) eine Heizwasserzufuhrleitung (29) und der zweite Mischregler (25b) eine Warmwasserzufuhrleitung (39) speist.

3. Warmwasserversorgungseinrichtung nach Anspruch 1 oder 2, **dadurch gekennzeichnet, dass** die Heizquelle mehrere Heizstäbe oder -spiralen (11 a, 11 b) umfasst, deren jeweiliger Betriebsmodus getrennt voneinander über die Kommunikationseinrichtung (35) einstellbar ist.

4. Warmwasserversorgungseinrichtung mit einem Thermometer (41), welches die Temperatur des Inhalts des Pufferspeichers (13) misst, nach einem der Ansprüche 1 bis 3, **dadurch gekennzeichnet, dass** eine Information zur Temperatur über die Kommunikationseinrichtung (35) dem Netzbetreiber (3) zur Verfügung gestellt wird.

5. Warmwasserversorgungssystem **dadurch gekennzeichnet, dass** es eine Vielzahl von Warmwasserversorgungseinrichtungen gemäß einer der Ansprüche 1 bis 4 umfasst, deren Betriebsmodi alle von dem Netzbetreiber (3) einstellbar sind.

6. Warmwasserversorgungssystem nach Anspruch 5, **dadurch gekennzeichnet, dass** alle Warmwasserversorgungseinrichtungen über denselben Sender der Kommunikationseinrichtung vom Netzbetreiber (3) erreichbar sind.

7. Warmwasserversorgungssystem nach Anspruch 6, **dadurch gekennzeichnet, dass** die Kommunikationseinrichtung eingerichtet ist, ein Steuersignal (S) auf zumindest eine Versorgungsleitung des Versorgungsnetzes (1) auf zu modulieren, wobei das Steuersignal von jeweils einer Empfangseinheit (35) empfangen wird, die die Einstellung des Betriebsmodus bewirkt.

8. Warmwasserversorgungssystem nach Anspruch 6, **dadurch gekennzeichnet, dass** das Kommunikationssystem eingerichtet ist, ein Funksignal an zumindest eine Empfangseinheit (35) abzusenden, die bei Empfang des Funksignals die Einstellung des Betriebsmodus bewirkt.

9. Verfahren zum Betrieb einer Warmwasserversorgungseinrichtung, nach einem der Ansprüche 1-4, **dadurch gekennzeichnet, dass** der Betriebsmodus vorsieht, eine Heizreserve bis zum Erreichen einer zulässigen Maximaltemperatur des Pufferspeicherinhalts vorzuhalten, die erst bei einem Absetzen eines modifizierten Steuersignals angebrochen wird.

## Claims

1. Hot water supply system with a heat source which interacts with a buffer storage system (13), the output of which (21 a) is connected to the input (23a) of a first mixer tap (25a), the mixer tap output of which (33a) is connected with a hot water consumer or heat consumer (29), whereby the heat source consists of a heating element (11 a) or a spiral heater, the operating mode of which is adjustable by a network operator (3) of an electricity supply network (1) via a communication system (35), **characterized by** the fact that the existing supply voltage (U) is measured and the measured value is incorporated in the setting of the operating mode.

2. Hot water supply system according to claim 1, **characterized by** the fact that a second controllable mixer tap (21 b) is connected to additional output (21 b), whereby the first mixer tap (21 a) supplies a heating water supply line (29) and the second mixer tap (21 b) supplies a warm water supply line (39).

3. Hot water supply system according to claim 1 or 2, **characterized by** the fact that the heat source consists of several heating elements or spiral heaters (11 a, 11 b), the specific operating mode of which can be set separately via the communication system (35).

4. Hot water supply system with a thermometer (41), which measures the temperature of the contents of the buffer storage system (13), according to one of claims 1 to 3, **characterized by** the fact that a notification of the temperature is provided to the network operator (3) via the communication system (35).

5. Hot water supply system **characterized by** the fact that it encompasses a variety of hot water supply systems pursuant to claims 1 to 4, the operational modes of which can all be set by the network operator (3).

6. Hot water supply system according to claim 5, **characterized by** the fact that all of the hot water supply systems can be accessed by the network operator (3) via the same transmitter of the communication system.

7. Hot water supply system according to claim 6, **characterized by** the fact that the communication system has been set up to modulate an actuating signal (S) on at least one supply line of the supply network (1), whereby the actuating signal is received by a receiver unit (35) which activates the setting of the operating mode.

8. Hot water supply system according to claim 6, **characterized by** the fact that the communication system has been set up to send a radio communication signal to at least one receiver unit (35) which activates the setting of the operating mode upon reception of the radio signal.

9. Process for the operation of a hot water supply system, according to claim 1 in particular, **characterized by** the fact that its operating mode intends to provide for a heat reserve until the reaching of a permitted maximum temperature of the contents of the buffer storage system which is only broached upon the triggering of a modified control signal.

## Revendications

1. Dispositif d'alimentation en eau chaude comprenant une source de chaleur agissant sur un tampon (13), dont la sortie (21a) est raccordée à l'entrée (23a) d'un premier mitigeur (25a), la sortie dudit mitigeur (33a) étant reliée à un dispositif d'utilisation d'eau chaude ou de chaleur (29), la source de chaleur comprenant un thermoplongeur (11a) ou une spirale de chauffe, dont le mode de fonctionnement peut être contrôlé par l'opérateur de réseau (3) d'un réseau d'alimentation électrique (1) par le biais d'un système de communication (35), **caractérisé en ce que** la tension électrique (U) est mesurée et que la valeur obtenue est prise en compte dans le réglage du mode de fonctionnement.

2. Dispositif d'alimentation en eau chaude d'après la revendication 1, **caractérisé en ce qu'** deuxième sortie (21b) est raccordée à un deuxième mitigeur (21b), le premier mitigeur (21a) alimentant une conduite d'alimentation en eau de chauffage (29) et le second mitigeur alimentant (21 b) une conduite d'alimentation en eau chaude (39).

3. Dispositif d'alimentation en eau chaude d'après la revendication 1 ou 2, **caractérisé en ce que** la source de chaleur comprend plusieurs thermoplongeurs ou spirales de chauffe (11a, 11b), dont le mode de fonctionnement respectif peut être contrôlé de manière séparée par le biais du système de communication (35).

4. Dispositif d'alimentation en eau chaude comprenant un thermomètre (41) qui mesure la température du contenu du tampon (13), d'après l'une des revendications 1 à 3, **caractérisé en ce qu'**une information relative à la température est transmise à l'opérateur de réseau (3) par le biais du système de communication (35).

5. Système d'alimentation en eau chaude **caractérisé en ce qu'**il comprend un grand nombre de dispositifs d'alimentation en eau chaude d'après l'une des revendications 1 à 4, dont les modes de fonctionnement peuvent tous être contrôlés par l'opérateur de réseau (3).

6. Système d'alimentation en eau chaude d'après la revendication 5, **caractérisé en ce que** tous les dispositifs d'alimentation en eau chaude sont accessibles par l'opérateur réseau (3) via le même émetteur du système de communication.

7. Système d'alimentation en eau chaude d'après la revendication 6, **caractérisé en ce que** le système de communication est configuré de manière à moduler un signal de commande (S) sur au moins une conduite d'alimentation du réseau d'alimentation (1), le signal de commande étant reçu par un récepteur (35) qui opère le réglage du mode de fonctionnement.

8. Système d'alimentation en eau chaude d'après la revendication 6, **caractérisé en ce que** le système de communication est configuré de manière à envoyer un signal radio à au moins un récepteur (35) qui opère le réglage du mode de fonctionnement à la réception du signal radio.

9. Procédure d'exploitation d'un dispositif d'alimentation en eau chaude d'après la revendication 1 notamment, **caractérisé en ce que** son mode de fonctionnement prévoit une réserve d'accumulation de chaleur accumulant la chaleur jusqu'à ce que le contenu du tampon atteigne une température maximale, ladite réserve n'étant entamée qu'après génération d'un signal de commande modifié.
